# EUROPEAN PATENT SPECIFICATION

(11) **EP 0 527 026 B1**
(45) Date of publication and mention of the grant of the patent: **08.01.1997**
(21) Application number: 92307063.5
(22) Date of filing: 03.08.1992
(51) Int. Cl.: C08K 13/04, C08L 81/02, C08K 9/12, C08K 3/34

(54) **Polyarylene sulfide resin composition less corrosive to metals**
Gegenüber Metallen weniger korrosive Polyarylen-Sulfidzusammensetzung
Composition de sulphides de polyarylène moins corrosive vis à vis des métaux

(30) Priority: 02.08.1991 JP 216632/91
(43) Date of publication of application: 10.02.1993
(73) Proprietor: Tosoh Corporation, Shinnanyo-shi, Yamaguchi-ken, 746 (JP)
(72) Inventor: Muneto, Toshihiko, Yokkaichi-shi, Mie-ken (JP); Kato, Toshikazu, Yokkaichi-shi, Mie-ken (JP)
(74) Representative: Kearney, Kevin David Nicholas

(56) References cited:
- EP-A- 0 417 759
- DATABASE WPIL Week 8806, Derwent Publications Ltd., London, GB; AN 88-038430
- DATABASE WPIL Week 8806, Derwent Publications Ltd., London, GB; AN 88-038431

## Description

This invention relates to a polyarylene sulfide resin compositions, in particular to such compositions that have significantly lower corrosive properties to metals.

Polyarylene sulfide resins exhibit excellent heat resistance, chemical resistance and flame resistance properties and thus have attracted a good deal of attention as engineering plastics materials. There is a strongly increasing demand for these resins in the field of manufacture of electrical and electronic parts, automotive parts and the like where their special properties are appreciated. Polyarylene sulfide resins exhibit also good formability and moldability properties and electrical resistance properties. Unfortunately, however, the resins tend to be corrosive to metals due to their sulfur content. For example, where the resins are formed into films, fibers and other shaped products and are used in production of electrical and electronic parts, it is necessary to reduce their corrosive properties in order for the above-mentioned desirable properties of the resins to be utilized in practice. For example, where polyarylene sulfide resins are used as material for covering or shielding or encapsulating electronic parts, the electrode, circuit conductor, lead frame or other metallic elements of the electronic parts can be often damaged by corrosion to give rise to functional troubles during service.

Several methods for reducing the corrosive properties of polyarylene sulfide resins have been proposed, for example, a method in which hydrotalcite compounds are added to the resins, see Japanese Patent Public Disclosure, KOKAI No. 60-186561; a method comprising addition of zinc, manganese or magnesium carbonate, see Japanese Patent Public, Disclosure No. KOKAI, 2-191655; a method comprising addition of active carbon, see Japanese Patent Public Disclosure, KOKAI No. 1-294770; a method comprising addition of fine calcium carbonate, see for example, Japanese Patent Application 1-281809. However, none of these known methods provide satisfactory lowering of the corrosive properties.

Further, a method in which alkali metal carbonates, silicates or hydroxides are added to polyarylene sulfide resin for the same purpose is also known, see United States Patent No. 4,017,450. However, these additives are not sufficiently effective and present a problem that the electrical properties of the resin are adversely affected thereby. Furthermore, although lithium carbonate is relatively effective as compared to other carbonates, it presents an economic problem due to its expense as well as a problem in that the mechanical strength of resin is lowered by addition of lithium carbonate.

It has been proposed to add zeolites to polyarylene sulfide resins for the same purpose as that of the present invention, see, for example, Japanese Patent Public Disclosures, KOKAIs No. 62-167356 and 62-295956. Although the addition of zeolites according to these known techniques has achieved some improvement regarding the corrosion problem, the improvement has not been satisfactory or sufficient in cases where the treated polyarylene sulfide resin compositions are employed for covering or encapsulating electrodes, lead frames, lead wires and the like used in the electronic technology. Therefore, there is a great need for further improvement of polyarylene sulfide resin materials with respect to their corrosive properties.

An object of the present invention is to lower the corrosiveness to metals of polyarylene sulfide resins.

Another object of the invention is to substantially reduce the corrosiveness of polyarylene sulfide resins to such an extent that they are acceptable for use in covering and encapsulating various metallic parts, elements and members which are intended to be used for a long period of time.

A further object of the invention is to provide a polyarylene sulfide resin composition which is less corrosive to metals than the conventional polyarylene sulfide resin compositions.

We have intensively studied and researched as to how the corrosiveness drawback of polyarylene sulfide resins can be effectively reduced or eliminated.

As a result, we have found the fact that the corrosive properties of polyarylene sulfide resins are effectively reduced by incorporating into the resins zeolites in which cations attached to Al₂O₃ component thereof have been exchanged with a specific range of other metallic ions. The present invention is based on this finding.

Accordingly, the present invention provides a polyarylene sulfide resin composition less corrosive to metals which comprises:
(A) 20 - 99% by weight of a polyarylene sulfide resin,
(B) 0.1 - 10% by weight of a zeolite which has been ion-exchanged with at least one metallic ion species selected from the group consisting of Cr, Mn, Fe, Co, Ni, Cu, Zn, Ag, Cd and Sn to an extent of 5 - 80% with the selected metal, on the basis of the atom number of the alkali metal, and
(C) 0 - 70% by weight of a fibrous an/or inorganic filler.

Component (A), namely polyarylene sulfide resin may comprise one or more polymers containing recurring units of the formula -Ar-S-, where Ar represents an arylene radical. Examples of -Ar-S- recurring units include: 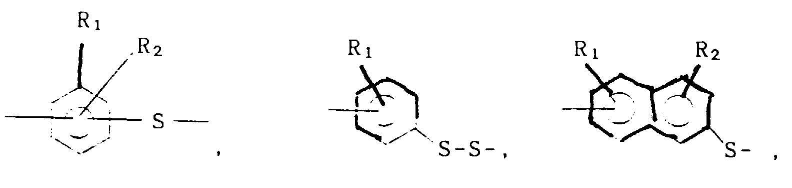 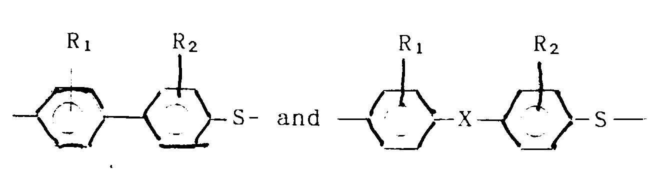 wherein R₁ and R₂, which may be the same or different, each represent a hydrogen atom, alkyl group, phenyl group, alkoxyl group, nitro group, halogen atom, alkylene glycol group, hydroxyl group, nitrile group, carboxyl group, sulfone group or amino group; and X represents a methylene, ethylene, isopropyl, ether, ketone or sulfone group. Particularly preferred is a polyphenylene sulfide resin. The polyphenylene resin may be a homopolymer or copolymer comprising at least 70 mole %, preferably at least 90 mole %, of recurring units of the structure:

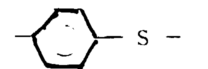

Generally speaking, there are two types of processes for preparing polyarylene sulfide resins; one type of the processes are disclosed, for example, in Japanese Patent Publications, KOKOKUs Nos. 44-2761 and 45-3368, United States Patent No. 3,274,165 and Japanese Patent Publication, KOKOKU No. 46-27255 and tend to produce a polymer of a relatively low molecular weight; the other type of processes, see, for example, Japanese Patent Publication No. 52-12240, tend to produce a substantially linear polymer of a relatively high molecular weight. The former polymers of relatively low molecular weights may be heated in an oxygen-containing atmosphere or in the presence of a crosslinking agent such as a peroxide so as to further polymerize them before use in the present invention.

The polyarylene sulfide resins that may be conveniently used in the invention have a melt viscosity in the range of about 100 - 50,000 poises, preferably 300 - 30,000 poises, as measured in a KOHKA-type flow tester using an orifice of 0.5 mm diameter and 2 mm length at 300°C under a load of 10 kg, where the resins are substantially linear, relatively high molecular weight polymers obtained by the second type of processes. On the other hand, in the cases where the polymers are further polymerized by heating them, for example, in the presence of a peroxide before use in the invention, the polymers should have a melt viscosity in the range of 10 - 10,000 poises before said heating treatment, and; a melt viscosity in the range of about 100 - 50,000, preferably 200 - 30,000 poises after said heating treatment. If the melt viscosity is less than about 100 poises, then the mechanical strength may be unacceptably poor. If the melt viscosity is greater than about 50,000 poises, the formability or moldability of the resin composition becomes less.

Component (B), namely zeolites that have been ion-exchanged with a specified range of metal species are particulate zeolite compounds which have been ion-exchanged with cations, for example, of transition metals at the surface region of each the particles. Chemical composition of the ion-exchanged zeolites is expressed by the formula:

(L₂O, M_{z}O)·Aℓ₂O₃·xSiO₂·yH₂O

where L represents an alkali metal; M represents at least one metal selected from the group consisting of Cr, Mn, Fe, Co, Ni, Cu, Zn, Ag, Cd, Sn
and, x is 2 or greater, preferably in the range of from 2 to 100; y represents a number dependent on the nature and state of the zeolite; and z is selected from 2 or 1 or 2/3 depending on the valency of M.

The zeolites that are to be ion-exchanged with the specific metal species for the purpose of the invention may be either synthetic or natural zeolites and may be of any structure.

Well known types of zeolites include clinoptilolite, mordenite, chabazite, etc. Artificially synthesized zeolites include zeolite A, faujasite (zeolites X and Y), zeolite L, mordenite, zeolite ZSM-5, etc. These are commercially produced and are conveniently employed for the purpose of the invention.

The ion-exchange treatment may be effected easily by bringing a natural or synthetic zeolite into contact with an aqueous solution of a sulfate, or nitrate or chloride of selected metal species and then washing the zeolite. The metallic ion species to be used for the ion-exchanging may be preferably metallic ions of one or more selected from Cr, Mn, Fe, Co, Ni, Cu, Zn, Ag, Cd, and Sn, and more preferably metallic ions of Co, Ni, Cu, Zn, Ag.

The extent to which the corrosiveness of the resin is reduced by addition of an ion-exchanged zeolite is mainly governed by the percentage of ion-exchange of the ion-exchanged zeolite. As the content of the specific substituent metallic ions in the zeolite increases, generally the corrosive properties of the resin tend to be lower. However, once the ion-exchange percentage exceeds about 80%, no further reduction in the corrosive properties of resin would be found. Therefore, the percentage of ions that are exchanged with ions of the specific metal species ranges from about 5 to about 80%, and more preferably from 10 to 50%. If the ion-exchange percentage is less than about 5%, then an appreciable reduction in the corrosiveness of resin would not be achieved. Apparently, the term "ion-exchange percent" means the proportion of the original or inherent cations exchanged with the specific metallic ions, that is calculated on the basis of the total concentration of the original cations before ion-exchanging.

The quantity of the ion-exchanged zeolite used in the present invention ranges 0.1 to 10%, preferably 0.5 - 8%, by weight on the basis of the total weight of the polyarylene sulfide resin, the zeolite and the fibrous and/or inorganic filler, if any. If the zeolite is used in a proportion less than 0.1% by weight, the corrosiveness reduction may not be achieved to an acceptable extent. If the proportion of zeolite used in the resin composition exceeds 10% by weight, the physical and mechanical strength properties of the products formed from the composition will be disadvantageously lowered.

Component (C), namely the fibrous fillers which may be used in the invention include, for example, glass fibers, carbon fibers, graphatized fibers, whiskers, metallic fibers, inorganic fibers, organic fibers, mineral fibers.

Particular examples of the fibrous fillers are listed below.

Examples of glass fibers include ordinary glass fibers, glass fibers coated with a metal such as nickel, copper, silane fibers, aluminosilicate glass fibers, hollow glass fibers, non-hollow glass fibers, etc.

Examples of carbon fibers include PAN carbon fibers produced from polyacrylonitrile; and pitch-carbon fibers produced from pitch.

Examples of inorganic fibers include rock-wool, zirconia, alumina-silica, barium titanate, silicon carbide, alumina, silica, and blast furnace slag fibers and the like.

Examples of mineral fibers include asbestos, wollastonite, magnesium oxysulfate and the like.

Examples of organic fibers include wholly aromatic polyamide fibers, phenol resin fibers, wholly aromatic polyester fibers and the like.

Examples of whiskers include whiskers of silicon nitride, basic magnesium sulfate, barium titanate, potassium titanate, silicon carbide, boron and the like.

Component (C), namely the inorganic fillers which may be used in the invention are platy or particulate inorganic materials, and include, for example, calcium sulfate, barium sulfate, lithium carbonate, calcium carbonate, magnesium carbonate, zinc carbonate, talc, mica, clay, silica, alumina, kaolin, zirconia, gypsum, calcium silicate, magnesium silicate, aluminium silicate, calcium phosphate, magnesium phosphate, zinc phosphate, apatite, titanium oxide, zinc oxide, copper oxide, iron oxide, tin oxide, magnesium oxide, carbon black, graphite, powdered glass, glass balloons, quartz, quartz glass, hydrotalcite, etc.

The quantity of the fibrous and/or inorganic fillers used in the present resin composition ranges from 0 to 70%, preferably from 20 to 50%, by weight of the total weight of the polyarylene sulfide resin, the zeolite and the fibrous and/or inorganic filler. The proportion of the fibrous and/or inorganic fillers added to the resin composition is not critical. However, addition of the fibrous and/or inorganic filler in excess of 80% by weight would give rise to a difficulty in forming or molding the composition.

The fibrous and/or inorganic fillers may be used in conjunction with any suitable known surface-treating agent or binder in order to enhance the adhesive properties to the polyarylene sulfide resin. This treatment is often preferred. Examples of the surface-treating agents or greige goods are functional group-containing compounds, such as epoxides, isocyanates, silanes, or titanates. Sizing of the filler with the functional compounds may be effected either prior to or during preparation of the resin composition.

Provided that the intended advantages of the invention are not adversely affected, one or more conventional additives, for example, antioxidant, heat stabilizer, UV-adsorbent, lubricant, releasing agent, dye, pigment and other colorant, flame retardant, flame proofing aid and antistatic agent.

If desired, one or more other polymers may be incorporated in the present composition. Examples include polyethylene, polypropylene, polybutadiene, polyisoprene, polychloroprene, polystyrene, polybutene, poly α-methylstyrene , polyvinyl acetate, polyvinyl chloride, polyacrylate, polymethacrylate, polyacrylonitrile, polyamides (e.g., nylon 6; nylon 6,6; nylon 6,10; nylon 12; nylon 11, nylon 4,6, etc.), polyesters (e.g., polyethylene terephthalate, polybutylene terephthalate, polyarylates, liquid crystalline polymers, etc.), polyurethanes, polyacetals, polycarbonates, polyphenylene oxides, polyphenylene sulfide sulfones, polyphenylene sulfide ketones, polysulfones, polyether sulfones, polyaryl sulfones, polyether ketones, polyether ether ketones, polyether imides, polyester imides, polyimides, polyamide imides, silicone resins, phenoxy resins, fluorine resins and the like; random block or graft-copolymers thereof; and mixtures thereof.

The resin composition according to the invention may be prepared by melt-kneading the above-mentioned components.

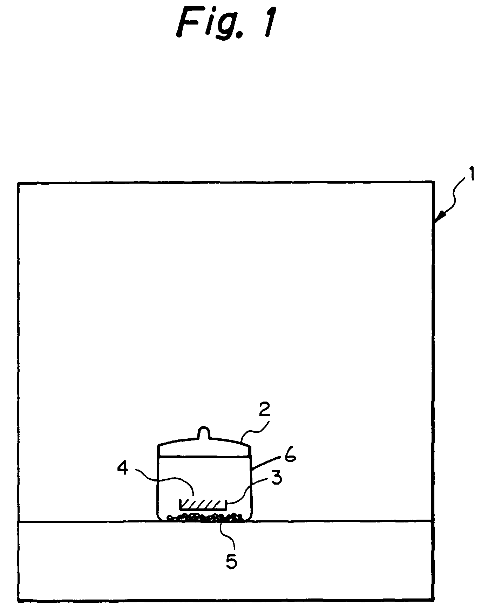

The invention will be illustrated in more detail with reference to the following non-limiting Examples and Comparative Examples, and the accompanying drawing in which: Fig. 1 shows a schematic sectional view of an experimental apparatus used for assessment of the corrosiveness of polyarylene sulfide resin compositions in the Examples.

In the Examples, the polyarylene sulfide resin compositions were tested for the corrosive properties by the following two experimental procedures: The components are premixed and then hot-melt-kneaded in a Banbury mixer, roll-kneader, or a single or twin screw extruder and pelletized.

The melt-kneading temperature ranges usually from about 300°C to about 420°C. The resulting pellets may be shaped or molded by any suitable conventional technique, such as extrusion. injection or compression molding.

### Corrosion Test (I)

As shown in Figure 1, pellets (10 g) of a polyarylene sulfide resin composition 5 under test were weighed into a weighing bottle 6. A petri dish 3, in which were laid a few pieces of lead frames 4 plated with a soft solder, was placed on the layer of the said pellets 5 in the bottle 6. Then the bottle 6 was closed with its stopper 2. The assembly was placed in an oven 1 and heated at a temperature of 200°C for a period of 48 hours.

Thereafter, the petri dish with the lead frame test pieces was withdrawn out the bottle and then placed in a humidi-thermostatic chamber at a temperature of 85°C and a humidity of 85% for 10 hours. Then, the petri dish with the test pieces was allowed to cool to room temperature.

The solder-plated lead frames were visually observed to assess the degree of corrosion in accordance with four ratings:
- A :: no discoloration
- B :: slight discoloration
- C :: gray discoloration
- D :: dark discoloration

### Corrosion Test (II)

As shown in Figure 1, pellets (30 g) of a polyarylene sulfide resin composition 5 under test were weighed into a weighing bottle 6. A petri dish 3, in which were laid a few pieces of a polished and cleaned metallic material 4 suitable for manufacturing molds (3.0 mm thick x 25 mm x 25 mm; available from Daido Steel Comp. under trade mark PD-613), was placed on the layer of said pellets 5 in the bottle 6. Then the bottle was closed with its stopper 2. The assembly was placed in the oven 1 and heated at a temperature of 330°C for a period of 4 hours. Thereafter, the petri dish with the metallic test pieces was withdrawn from the bottle and then placed in a humidi-thermostatic chamber at a temperature of 85°C and a humidity of 85% for one hour. Then the petri dish with the test pieces was allowed to cool to room temperature. The metallic test pieces were visually observed to assess the degree of corrosion in accordance with four ratings:
- A :: no discoloration
- B :: slight discoloration
- C :: gray discoloration
- D :: dark discoloration

### Preparation 1

### Synthesis of polyarylene sulfide resin

A polyarylene sulfide resin was synthesized by the following procedure and used in the Examples.

A 15 liter-capacity autoclave was charged with 1.8 moles of sodium sulfide Na₂S.2.9H₂O and 4.5 kg of N-methyl-2-pyrrolidone (NMP) and heated to 200°C under a nitrogen stream with stirring so as to give 636 g of a distillate comprising mainly water. The reactor system was cooled down to 170°C and charged then with 1.8 moles of p-dichlorobenzene and 1.5 kg of NMP. The reactor system was hermetically sealed under a stream of nitrogen and heated to 250°C for 3 hours so as to allow the mixture to polymerize. Upon completion of the polymerization, the reactor system was cooled and the reaction mixture was poured into water to precipitate the polymer. The precipitated polymer was collected by a glass funnel, washed with about 10 liters of warm water and filtered off. This washing procedure was repeatedly carried out. The washed polymer was thermally dried in vacuo overnight and a yield of 1.85 kg corresponding to 95% was attained. The thus obtained polymer had a melt viscosity of 250 poises as measured in a KOHKA-type flow tester using an orifice of 0.5 mm diameter and 2 mm length at 300°C under a load of 10 kg.

The polymer was cured in air by placing it for 3 hours in an oven maintained at 250°C. The thus cured polyphenylene sulfide resin exhibited an increased melt viscosity of 1,400. This cured resin will be referred to as PPS hereinafter.

### Preparation 2

Zeolites used in the Examples are listed below:
- Na-Y ;: an artificially synthesized sodium Y zeolite
- Cu-Y ;: prepared by ion-exchanging Na-Y with copper sulfate
- Zn-Y ;: prepared by ion-exchanging Na-Y with zinc sulfate
- Ni-Y ;: prepared by ion-exchanging Na-Y with nickel sulfate
- Co-Y ;: prepared by ion-exchanging Na-Y with cobalt sulfate
- Na-Z5;: an artificially synthesized sodium ZSM-5 zeolite
- Cu-Z5;: prepared by ion-exchanging Na-Z5 with copper sulfate

### Metal-ion-exchanging of zeolites

A zeolite, Y or ZSM-5, was combined with pure water to form an aqueous slurry having a solids content of 20%. To the slurry an appropriate salt, copper sulfate, or zinc sulfate, or nickel sulfate, or cobalt sulfate, was added and mixed throughly for 30 minutes at room temperature so as to exchange Na for the selected metal. Then the slurry was filtered and washed with water until no sulfate ion was detectable. The thus treated zeolite was dried at 100°C for several hours.

SiO₂/Al₂O₃ molar ratios, metal contents, wt.%, and ion-exchange percentages found in the above prepared zeolites are listed in the table below.

| Zeolites | SiO₂/Al₂O₃ molar ratio | Metal Contents calculated as oxide (oxide %) | Ion-exchange percentages calculated as oxide % |
|---|---|---|---|
| Na-Y | 5.5 | NaO·12.5 | 0* |
| Cu-Y | 5.5 | CuO·6.01 | 37.0 |
| Zn-Y | 5.5 | ZnO·5.78 | 35.3 |
| Ni-Y | 5.5 | Nio·5.36 | 35.4 |
| Co-Y | 5.5 | CoO·4.94 | 33.0 |
| Na-Z5 | 23.0 | NaO·14.5 | 0* |
| Cu-Z5A | 23.0 | CuO·0.08 | 4.3* |
| Cu-Z5B | 23.0 | CuO·3.30 | 17.8 |
| Cu-Z5C | 23.0 | CuO·8.84 | >99* |

| | | | |
|---|---|---|---|
| * comparative | | | |

### Examples 1 - 7

Samples of PPS from Preparation 1, glass fibers (chopped strand), and samples of the ion-exchanged zeolites from Preparation 2 were mixed in the proportions as shown in Table 1, and extruded at a temperature of 330°C and pelletized through a twin-screw extruder (PCM-45; manufactured by Ikegai Iron Works Ltd.) to give pellets of the respective resin compositions.

Then the pellets were dried at 120°C for 2 hours to drive moisture therefrom and subjected to the above-defined corrosion tests (I) and (II). The results are set forth in Table 1.

### Comparative Example 1

A sample of PPS from Preparation 1 and glass fibers (chopped strand) without zeolite were mixed in the proportions as shown in Table 1, and extruded at a temperature of 330°C and pelletized through a twin-screw extruder (PCM-45; Ikegai Iron Works Ltd.) to give pellets of the composition.

Then the pellets were dried at 120°C for 2 hours to drive moisture therefrom, and subjected to the corrosion tests (I) and (II). The results are set forth in Table 1.

### Comparative Examples 2 and 3

Samples of PPS from Preparation 1, glass fibers (chopped strand), and a sodium Y zeolite (Na-Y) were mixed in the proportions as shown in Table 1, and extruded at a temperature of 330°C and pelletized through a twin-screw extruder (PCM; Ikegai Iron works Ltd.) to give pellets of the resin compositions.

The pellets were dried at 120°C for 2 hours to drive moisture therefrom, and subjected to the corrosion tests (I) and (II). The results are set forth in Table 1.

### Comparative Example 4

A sample of PPS from Preparation 1, glass fibers (chopped strand) and a sodium ZSM-5 zeolite (Na-Z5) were mixed in the proportions as shown in Table 1 and extruded at a temperature of 330°C and pelletized through a twin-screw extruder (PCM-45; Ikegai Iron Works Ltd.) to give pellets of the composition.

Then the pellets were dried at 120°C for 2 hours to drive moisture therefrom, and subjected to the corrosion tests (I) and (II). The results are set forth in Table 1.

### Comparative Example 5

A sample of PPS from Preparation 1, glass fibers (chopped strand) and a copper ZSM-5 zeolite (Cu-Z5A) from Preparation 2 were mixed, and extruded at a temperature of 330°C and pelletized through a twin-screw extruder (PCM-45; Ikegai Iron Works Ltd.) to give pellets of the composition.

Then the pellets were dried at 120°C for 2 hours to drive moisture therefrom, and subjected to the corrosion tests (I) and (II). The results are set forth in Table 1.

### Comparative Example 6

A sample of PPS from Preparation 1, glass fibers (chopped strand) and a copper ZSM-5 zeolite (Cu-Z5C) from Preparation 2 were mixed in the proportions as shown in Table 1, and extruded at a temperature of 330°C and pelletized through a twin-screw extruder (PCM-45; Ikegai Iron Works Ltd.) to give pellets of the composition.

Then the pellets were dried at 120°C for 2 hours to drive moisture therefrom, and subjected to the corrosion tests (I) and (II). The results are set forth in Table 1.

### Comparative Example 7

A sample of PPS from Preparation 1, glass fibers (chopped strand) and lithium carbonate (available from Wako Pure Chemical Industries, Ltd.) were mixed in the proportions as shown in Table 1, and extruded at a temperature of 330°C and pelletized through a twin-screw extruder (PCM-45; Ikegai Iron Works Ltd.) to give pellets of the composition.

Then the pellets were dried at 120°C for 2 hours to drive moisture therefrom, and subjected to the corrosion test (I) and (II). The results are set forth in Table 1.

**Table 1**

| | Composition | | | Corrosion Tests | |
|---|---|---|---|---|---|
| | PPS wt.% | Glass Fibers wt.% | Zeolites amounts wt.% | (I) | (II) |
| Examples | | | | | |
| 1 | 59 | 40 | Cu-Y .1 | B | A |
| 2 | 59 | 40 | Ni-Y .1 | B | B |
| 3 | 59 | 40 | Zn-Y .1 | B | B |
| 4 | 59 | 40 | Co-Y .1 | B | A |
| 5 | 55 | 40 | Cu-Y .5 | A | A |
| 6 | 59 | 40 | Cu-Z5B.1 | B | B |
| 7 | 55 | 40 | Cu-Z5B.5 | A | B |
| Comparative Examples | | | | | |
| 1 | 60 | 40 | - | D | D |
| 2 | 59 | 40 | Na-Y .1 | D | C |
| 3 | 55 | 40 | Na-Y .5 | D | C |
| 4 | 55 | 40 | Na-Z5 .5 | D | C |
| 5 | 59 | 40 | Cu-Z5A.1 | C | C |
| 6 | 59 | 40 | Cu-Z5C.1 | C | C |
| 7 | 55 | 40 | *1 .5 | D | B |

| | | | | | |
|---|---|---|---|---|---|
| *1: lithium carbonate (available from Wako Pure Chemical Industries) | | | | | |

References have been made in the examples to "glass fibres (chopped strand)". The same material was used in all the examples.

According to the invention, polyarylene sulfide resins may be treated with zeolites which have been ion-exchanged with a selected range of metal species so as to give polyarylene sulfide resin compositions less corrosive to metallic products. The thus resulting resin compositions are valuable in industry and useful particularly in the field of manufacture of electrical and electronic instruments where corrosion of metallic parts, elements or members in contact with resins should be avoided.

## Claims

1. A polyarylene sulfide resin composition which comprises:
(A) 20 - 99.9% by weight of a polyarylene sulfide resin,
(B) 0.1 - 10% by weight of a zeolite , and
(C) 0 - 70% by weight of a fibrous an/or inorganic filler, characterised in that the zeolite has been ion-exchanged with at least one metallic ion species selected from the group consisting of Cr, Mn, Fe, Co, Ni, Cu, Zn, Ag, Cd and Sn to an extent of 5 - 80% with the selected metal, on the basis of the atom number of the alkali metal.

2. A resin composition as claimed in Claim 1 characterised in that the polyarylene sulfide resine is a polyphenylene sulfide resin containing at least 70 mole % of repeating units of the formula: 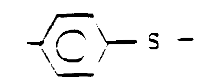 and remaining proportion of other comonomer or comonomers, if any.

3. A resin composition as claimed in Claim 1 or Claim 2 characterised in that the polyarylene sulfide resin has a melt viscosity of 100 - 50,000 poises as measured in a KOHKA-type flow tester using an orifice of 0.5 mm diameter and 2 mm length at 300°C under a load of 10 kg.

4. A resin composition as claimed in any one of the preceding claims characterised in that the ion-exchanged zeolite has the following chemical composition:
(L₂O,M_{z}O).Al₂O₃.xSiO₂.yH₂O
where L represents an alkali metal; M represents at least one metal selected from the group consisting of Cr, Mn, Fe, Co, Ni, Cu, Ag, Cd and Sn; x is 2 or greater; y represents a number dependent on the nature and state of the zeolite; and z is selected from 2 or 1 or 2/3 depending on the valency of M.

5. A resin composition as claimed in claim 4 characterised in that M is selected from the group consisting of Co, Ni, Cu, Zn and Ag.

6. A resin composition as claimed in any one of claims 1 to 5 characterised in that the ion-exchanged percentage of the alkali metal ranges from 10 to 50%.

7. Articles which are formed or molded from a resin composition as claimed in any one of the preceding claims.

## Patentansprüche

1. Polyarylensulfidharzzusammensetzung, die umfaßt:
(A) 20 - 99,9 Gew.-% eines Polyarylensulfidharzes,
(B) 0,1 - 10 Gew.-% eines Zeoliths und
(C) 0 - 70 Gew.-% eines faserartigen und/oder anorganischen Füllstoffs, dadurch gekennzeichnet, daß das Zeolith einem Ionenaustausch unterzogen worden ist mit mindestens einer metallischen Ionenart ausgewählt aus der Gruppe bestehend aus Cr, Mn, Fe, Co, Ni, Cu, Zn, Ag, Cd und Sn bis zu einem Ausmaß an 5 - 80 % mit dem ausgewählten Metall auf der Basis der Atomzahl des Alkalimetalls.

2. Eine Harzzusammensetzung wie in Anspruch 1 beansprucht, dadurch gekennzeichnet, daß das Polyarylensulfidharz ein Polyphenylensulfidharz ist enthaltend mindestens 70 Mol % von sich wiederholenden Einheiten der Formel: 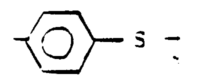 und einem restlichen Anteil an einem anderen Comonomer oder Comonomeren, wenn überhaupt.

3. Eine Harzzusammensetzung wie in Anspruch 1 oder Anspruch 2 beansprucht, dadurch gekennzeichnet, daß das Polyarylensulfidharz eine Schmelzviskosität von 100 bis 50000 Poise aufweist, wie gemessen in einem Fließtester vom KOHKA-Typ unter Verwendung einer Öffnung von 0,5 mm Durchmesser und einer Länge von 2 mm bei 300°C unter einer Belastung von 10 kg.

4. Eine Harzzusammensetzung wie in einem der vorhergehenden Ansprüche beansprucht, dadurch gekennzeichnet, daß das dem Ionenaustausch unterzogene Zeolith die folgende chemische Zusammensetzung besitzt:
(L₂O,M_{z}O).Al₂O₃.xSiO₂.yH₂O
worin L ein Alkalimetall darstellt; M stellt mindestens ein Metall dar, ausgewählt aus der Gruppe bestehend aus Cr, Mn, Fe, Co, Ni, Cu, Ag, Cd und Sn; x ist 2 oder größer; y ist eine Zahl abhängig von der Natur und dem Zustand des Zeoliths; und z wird ausgewählt aus 2 oder 1 oder 2/3 abhängig von der Valenz von M.

5. Eine Harzzusammensetzung wie in Anspruch 4 beansprucht, dadurch gekennzeichnet, daß M ausgewählt wird aus der Gruppe bestehend aus Co, Ni, Cu, Zn und Ag.

6. Eine Harzzusammensetzung wie in einem der Ansprüche 1 bis 5 beansprucht, dadurch gekennzeichnet, daß der ionenausgetauschte Prozentsatz des Alkalimetalls von 10 bis 50 % reicht.

7. Gegenstände, die aus einer Harzzusammensetzung wie in einem der vorhergehenden Ansprüche beansprucht hergestellt oder geformt sind.

## Revendications

1. Composition résineuse de polysulfure d'arylène qui contient:
(A) 20 - 99,9% en poids d'une résine de polysulfure d'arylène,
(B) 0,1 - 10% en poids d'une zéolite, et
(C) 0 - 70% en poids d'une charge fibreuse et / ou inorganique, caractérisée en ce que la zéolite a subi un échange ionique avec au moins une espèce ionique métallique choisie parmi le groupe contenant Cr, Mn, Fe, Co, Ni, Cu, Zn, Ag, Cd et Sn, dans une ampleur de 5 - 80% avec le métal choisi, sur la base du nombre d'atomes du métal alcalin.

2. Composition résineuse telle que revendiquée dans la Revendication 1, caractérisée en ce que la résine de polysulfure d'arylène est une résine de poly(sulfure de phénylène) contenant au moins 70 % en moles d'unités récurrentes de formule: 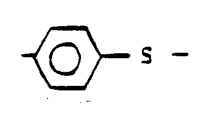 et la proportion restante d'un autre comonomère ou d'autres comonomères, s'il y en a.

3. Composition résineuse telle que revendiquée dans la Revendication 1 ou dans la Revendication 2, caractérisée en ce que la résine de polysulfure d'arylène possède une viscosité à l'état fondu de 100 - 50 000 poises, telle que mesurée dans un débitmètre du type KOHKA en utilisant un orifice de 0,5 mm de diamètre et de 2 mm de longueur, à 300°C, sous une charge de 10 kg.

4. Composition résineuse telle que revendiquée dans l'une quelconque des revendications précédentes, caractérisée en ce que la zéolite ayant subi un échange ionique possède la composition chimique suivante:
(L₂O, M_{z}O) . Al₂O₃ . xSiO₂ . yH₂O
dans laquelle L représente un métal alcalin; M représente au moins un métal choisi parmi le groupe contenant Cr, Mn, Fe, Co, Ni, Cu, Ag, Cd et Sn; x est égal ou supérieur à 2; y représente un nombre qui dépend de la nature et de l'état de la zéolite; et z est choisi parmi 2 ou 1 ou 2/3 en fonction de la valence de M.

5. Composition résineuse telle que revendiquée dans la Revendication 4, caractérisée en ce que M est choisi parmi le groupe contenant Co, Ni, Cu, Zn et Ag.

6. Composition résineuse telle que revendiquée dans l'une quelconque des revendications 1 à 5, caractérisée en ce que le pourcentage d'échange ionique du métal alcalin varie de 10 à 50%.

7. Objets qui sont façonnés ou moulés à partir d'une composition résineuse telle que revendiquée dans l'une quelconque des revendications précédentes.
